# EUROPEAN PATENT SPECIFICATION

(11) **EP 1 657 269 B1**
(45) Date of publication and mention of the grant of the patent: **09.01.2008**
(21) Application number: 05024453.2
(22) Date of filing: 09.11.2005
(51) Int. Cl.: C08G 59/56, C08L 63/00, C08K 3/04, H01B 1/24, H01M 8/02

(54) **Conductive epoxy resin composition and method for producing the same**
Leitfähiges Epoxyharz und Herstellungsverfahren
Composition conductrice de résine epoxy et sa méthode de préparation

(30) Priority: 10.11.2004 JP 2004326851
(43) Date of publication of application: 17.05.2006
(73) Proprietor: NICHIAS CORPORATION, Tokyo 105-8555 (JP)
(72) Inventor: Murakami, Atsushi c/o Nichias Corporation, Hamamatsu-shi Shizuoka 431-2103 (JP); Shimizu, Takayoshi c/o Nichias Corporation, Hamamatsu-shi Shizuoka 431-2103 (JP)
(74) Representative: Grünecker, Kinkeldey, Stockmair & Schwanhäusser Anwaltssozietät

(56) References cited:
- EP-A- 1 029 893
- US-B1- 6 746 771
- PATENT ABSTRACTS OF JAPAN vol. 2002, no. 11, 6 November 2002 (2002-11-06) & JP 2002 201257 A (SUMITOMO BAKELITE CO LTD), 19 July 2002 (2002-07-19)
- WHAN GUN KIM, HO GYU YOON, JUN YOUNG LEE: "Cure kinetics of biphenyl epoxy resin system using latent catalysts" JOURNAL OF APPLIED POLYMER SCIENCE, vol. 81, no. 11, 19 June 2001 (2001-06-19), pages 2711-2720, XP002358691

## Description

### FIELD OF THE INVENTION

The present invention relates to an epoxy resin composition having conductivity and a method for producing the same. Further, the invention relates to a fuel cell separator produced by molding the conductive epoxy resin composition, or various molded articles.

### BACKGROUND OF THE INVENTION

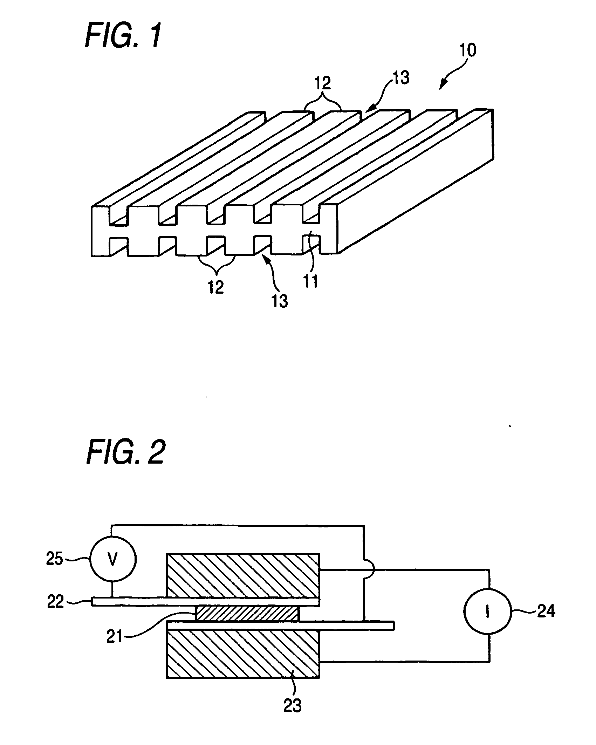

For example, as shown by a schematic perspective view in Fig. 1, a fuel cell separator 10 is formed by providing a plurality of partition walls 12 in a protruding state at predetermined intervals on both sides of a flat plate portion 11. In order to fabricate a fuel cell, a number of fuel cell separators 10 are stacked along the protruding direction (the vertical direction in Fig. 1) of the partition walls 12. This stacking allows reactive gas (hydrogen or oxygen) to flow through channels 13 formed by pairs of adjacent partition walls 12. The fuel cell separator is produced by molding a resin composition containing a resin material and a conductive material such as graphite to the shape as described above.

As a method for molding the fuel cell separator, it is generally molded by heat compression molding in which a mixture containing a thermoplastic resin such as an epoxy resin or a phenol resin, a curing agent, a curing accelerator, a carbon material and the like is filled in a mold, and hot pressed. However, this heat compression molding is low in productivity, so that attempts have also been made to produce the fuel cell separator by injection molding (for example, see patent documents 1 to 3).

According to injection molding, a compound comprising the resin composition having the above-mentioned composition is injected from a cylinder into a mold. At this time, the compound is transferred to a cavity of the mold through a narrow flow path called a runner. Since the mold is in a closed state, the compound is required to have high fluidity in order to fill every corner of the mold with the compound. However, when artificial graphite or natural graphite is used as the carbon material, in order to secure conductivity necessary as the fuel cell separator, the carbon material is required to be added in large amounts, which relatively decreases the resin amount. Accordingly, the resin composition has an increased viscosity and a decreased fluidity.

It is also conceivable that expanded graphite excellent in conductivity is used as the carbon material to decrease the amount thereof used, thereby enhancing fluidity of the resin composition. However, the expanded graphite has the problem that it is easily crushed during kneading with the resin material because of its thin flake form. This is caused by the following reason. The resin composition is usually obtained by melt kneading a resin material, a curing agent, a curing accelerator, a carbon material and the like, and curing of the curing agent proceeds in melt kneading to increase the viscosity, which causes high shear stress to act, thereby crushing the expanded graphite. Alternatively, the preparation of the resin composition is also performed by dry mixing, in place of melt kneading (for example, see patent document 4). However, the viscosity increases to such a degree that the composition scarcely flows, so that it is substantially impossible to injection mold it.

Further, a urea compound such as Diurone ((3,4-dichlorophenyl)-1,1-dimethylurea) has also been used as the curing accelerator (for example, see patent document 5). The use of the urea-based curing accelerator has the advantages that heat stability of the resin composition is enhanced, and that an increase in viscosity does not occur in melt kneading. However, the urea-based compound decomposes at the time of curing to generate a gas, which may cause voids to occur in the fuel cell separator. In particular, when the expanded graphite is used, voids become liable to occur. Further, when the composition is allowed to cure within a short period of time, voids become liable to occur because of :its insufficient curing. The composition can cure within a short period of time by adding the urea compound in a large amount, but this produces a large amount of a decomposed gas. Accordingly, voids may greatly occur. When such voids occur, sealing properties of a reactive gas are deteriorated to reduce power generation performance of a fuel cell stack.
Patent Document 1: JP-A-2003-338294
Patent Document 2: JP-A-2003-297386
Patent Document 3: JP-A-2003-242994
Patent Document 4: JP-A-2003-257447
Patent Document 5: JP-A-2002-201257

### SUMMARY OF THE INVENTION

The present invention has been made in view of the above-mentioned circumstances.

Accordingly, an object of the present invention is to provide a conductive resin composition which has high conductivity, is easily applicable to a high-efficiency molding method such as injection molding, and further is moldable within a short period of time, and moreover, which produces no void at that time.

Another object of the invention is to provide a fuel cell separator and other molded articles which are molded from such a conductive resin composition, and have high strength, high conductivity, no void and high dimensional accuracy.

Other objects and effects of the invention will become apparent from the following description.

In order to achieve the above-mentioned objects, the invention provides the followings:
(1) A conductive epoxy resin composition comprising an epoxy resin, a curing agent, a curing accelerator comprising a salt of a diazabicyclo compound and an organic acid, and a carbon material containing expanded graphite;
(2) The conductive epoxy resin composition described in the above (1), wherein the organic acid has an acid dissociation constant of 0 to 10;
(3) The conductive epoxy resin composition described in the above (1) or (2), wherein the organic acid is an aromatic organic acid;
(4) The conductive epoxy resin composition described in any one of the above (1) to (3), wherein the organic acid is a multivalent organic acid;
(5) The conductive epoxy resin composition described in the above (1), wherein the organic acid is orthophthalic acid, isophthalic acid, terephthalic acid or trimesic acid;
(6) The conductive epoxy resin composition described in any one of the above (1) to (5), wherein the diazabicyclo compound is 1,8-diazabicyclo (5,4,0) undecene-7 or 1,5-diazabicyclo (4,3,0)nonene-5;
(7) The conductive epoxy resin composition described in any one of the above (1) to (6), wherein the curing agent has two or more phenolic hydroxyl groups in its molecule;
(8) The conductive epoxy resin composition described in any one of the above (1) to (7), wherein the epoxy resin is a multifunctional epoxy resin;
(9) The conductive epoxy resin composition described in any one of the above (1) to (8), wherein 5 to 100% by weight of the carbon material is expanded graphite and the balance is at least one of artificial graphite, natural flake graphite, soil graphite, carbon black and carbon fiber;
(10) The conductive epoxy resin composition described in any one of the above (1) to (9), wherein the carbon material accounts for 35 to 85% by weight of the total amount;
(11) The conductive epoxy resin composition described in any one of the above (1) to (10), wherein the curing accelerator is blended in an amount of 0.1 to 20 parts by weight based on 100 parts by weight of the curing agent;
(12) A method for producing a conductive epoxy resin composition comprising blending, at a predetermined ratio, an epoxy resin, a curing agent, a curing accelerator comprising a salt of a diazabicyclo compound and an organic acid, and a carbon material containing expanded graphite, followed by melt-kneading;
(13) The method described in the above (12), wherein the melt kneading is carried out at a temperature equal to or higher than a softening temperature of the epoxy resin or the curing agent;
(14) An epoxy resin molded article produced by transfer molding or injection molding the conductive epoxy resin composition described in any one of the above (1) to (11) ; and
(15) A fuel cell separator comprising the conductive epoxy resin composition described in any one of the above (1) to (11).

The conductive epoxy resin composition of the invention has suppressed curability during melt kneading by the use of the specific curing accelerator to thereby increase fluidity. This makes it possible to mold the composition by transfer molding or injection molding and to fill a mold with the composition to a higher extent, thereby making it possible to efficiently produce a molded article having high strength, no occurrence of void and high dimensional accuracy. Further, the conductive filler also contains expanded graphite excellent in conductivity, so that sufficient conductivity can be secured with a small amount used. It is therefore possible to reduce the cost of the conductive fillers. Further, the resin amount relatively increases, which can further improve fluidity.

### BRIEF DESCRIPTION OF THE DRAWINGS

Fig. 1 is a schematic perspective view showing one embodiment of a fuel cell separator.
Fig. 2 is a schematic view illustrating a method for measuring the total resistance in Examples.
Fig. 3 is a graph showing measurement results of curing reaction progress.
Fig. 4 is a graph showing measurement results of curing reaction progress.
Fig. 5 is a graph showing measurement results of curing reaction progress.
Fig. 6 is a graph showing measurement results of curing reaction progress.
Fig. 7 is a graph showing measurement results of curing reaction progress.
Fig. 8 is a graph showing measurement results of curing reaction progress.

The reference numerals used in the drawings denote the followings, respectively.
10: Fuel cell separator
11: Flat plate portion
12: Partition walls
13: Channels

### DETAILED DESCRIPTION OF THE INVENTION

The present invention will be described in detail below.

The conductive epoxy resin composition of the invention contains an epoxy resin, a curing agent, a curing accelerator and a carbon material as indispensable components.

The epoxy resin is preferably a compound having two or more epoxy groups in its molecule. Examples thereof include but are not limited to bisphenol type epoxy resins such as a bisphenol A type epoxy resin, a bisphenol F type epoxy resin, a bisphenol AF type epoxy resin, a bisphenol S type epoxy resin, a hydrogenated bisphenol A type epoxy resin and a halogenated bisphenol A type epoxy resin; multifunctional epoxy resins such as a phenol novolak type epoxy resin, a cresol novolak type epoxy resin, a bisphenol A novolak type epoxy resin, a tris-hydroxyphenylmethane type epoxy resin, a phenol dicyclopentadiene type epoxy resin, a halogenated phenol novolak type epoxy resin, a naphthol novolak type epoxy resin, resorcin epoxide and a tetraphenylol ethane type epoxy resin; cyclic epoxy resins; biphenyl type epoxy resins; naphthalene type epoxy resins; glycidyl ester type epoxy resins and glycidyl amine type epoxy resins.

Of the above-mentioned epoxy resins, multifunctional epoxy resins are particularly suitably used. The epoxy equivalent is preferably from 50 to 500, and more preferably from 100 to 300. When the epoxy equivalent is too low, a molded article becomes brittle. On the other hand, when the epoxy equivalent is too high, only a molded article having low heat resistance and strength is obtained.

The epoxy resin reacts with the curing agent to form an epoxy-cured product. Various known compounds can be used as the curing agent. Examples thereof include but are not limited to aliphatic, alicyclic and aromatic polyamines such as diethylenetriamine, triethylenetetramine, tetraethylenepentamine, menthenediamine, isophoronediamine, N-aminoethylpiperazine, m-xylenediamine and diaminodiphenylmethane, or carbonates thereof; acid anhydrides such as phthalic anhydride, methyltetrahydrophthalic anhydride, methylnadic anhydride, dodecylsuccinic anhydride, pyromellitic anhydride, benzophenonetetracarboxylic anhydride, trimellitic anhydride and polyazelaic anhydride; polyphenols such as phenol novolak and cresol novolak; and polymercaptan. The plurality of curing agents can also be used in combination.

Of the above-mentioned curing agents, the curing agents such as polyamines or carbonates thereof, acid anhydrides, polyphenols and polymercaptan are called a polyaddition type curing agent, because they themselves react with an epoxy compound by polyaddition reaction to constitute the cured product. An excess or deficiency of the polyaddition type curing agent leads to the remaining of unreacted functional groups, so that the amount thereof added has an appropriate range. In general, the polyaddition type curing agent is used preferably in an amount of 0.7 to 1.2 equivalent weights, particularly in an amount of 0.8 to 1.1 equivalent weights, per epoxy group of an epoxy resin precursor. The curing rate of the thermosetting resin can be arbitrarily changed by variously selecting the kind and amount of curing agent, the kind of thermosetting resin and the kind and amount of curing accelerator. One skilled in the art will easily determine the kinds and amounts of thermosetting resin, curing agent and curing accelerator, in accordance with the intended curing conditions.

In the invention, a compound having two or more phenolic hydroxyl groups is preferred as the curing agent. Such compounds include the above-mentioned polyphenols and bisphenol A, such as phenol novolak, resol novolak, bisphenol A novolak, aralkyl type phenol novolak, a triphenylmethane type phenol resin, a terpenephenol resin, naphthol novolak and a phenol dicyclopentadiene resin. The compound having two or more phenolic hydroxyl groups can provide a molded article having high heat resistance.

In the invention, a salt of a diazabicyclo compound and an organic acid is used as the curing accelerator. Although there is no particular limitation on the diazabicyclo compound, examples thereof include but are not limited to 1,8-diazabicyclo(5,4,0)undecene-7 (abbreviated to DBU), 1,5-diazabicyclo(4,3,0)nonene-5 (abbreviated to DBN) and 6-dibutylamino-1,8-diazabicyclo(5,4,0)undecene-7. Above all, 1,8-diazabicyclo(5,4,0)undecene-7 is a preferred diazabicyclo compound for use in the invention, because it is inexpensive, easily available, high in stability and hardly volatilize.

The organic acids include but are not limited to, for example, orthophthalic acid (an aromatic multivalent organic acid, acid dissociation constant: 2.95), isophthalic acid (an aromatic multivalent organic acid, acid dissociation constant: 3.48), terephthalic acid (an aromatic multivalent organic acid, acid dissociation constant: 3.54), trimesic acid (an aromatic multivalent organic acid, acid dissociation constant: 3.13), formic acid (acid dissociation constant: 3.55), acetic acid (acid dissociation constant: 4.76), phenol (an aromatic organic acid, acid dissociation constant: 9.89), benzoic acid (an aromatic organic acid, acid dissociation constant: 4.00), salicylic acid (an aromatic organic acid, acid dissociation constant: 2.75), oxalic acid (a multivalent organic acid, acid dissociation constant: 1.27), cinnamic acid (acid dissociation constant: 4.44), tartaric acid (a multivalent organic acid, acid dissociation constant: 3.04), lactic acid (acid dissociation constant: 3.86), phenol novolak (a multivalent organic acid, acid dissociation constant: unknown) and orthocresol (a multivalent organic acid, acid dissociation constant: unknown). Further, the organic acid is incorporated into the epoxy resin during curing reaction, so that the organic acid having a more inflexible molecular structure and larger number of reaction sites with the epoxy resin can provide a molded article having higher heat resistance and strength. Accordingly, an aromatic organic acid having an inflexible structure and a multivalent organic acid having many reaction sites with the epoxy resin are preferred.

The salt of the diazabicyclo compound and the organic acid dissociates to the diazabicyclo compound and the organic acid upon heating, and the dissociated diazabicyclo compound acts as the curing accelerator. Accordingly, when the temperature at which the salt of the diazabicyclo compound and the organic acid dissociates is high, a molding material having high heat stability is obtained. The dissociation temperature is proportional to the strength of the organic acid. When the organic acid is strong, the molding material having high heat stability can be obtained. However, when the organic acid is extremely strong, the salt of the diazabicyclo compound and the organic acid is hydrolyzed by deliquescence of the organic acid to rather decrease heat stability. Further, when an extremely strong organic acid is used, a mixing apparatus or a molding apparatus may be corroded. The strength of an acid is represented by the acid dissociation constant (pKa), and the smaller acid dissociation constant shows the stronger acidity. Accordingly, the acid dissociation constant of the organic acid used in the invention has an appropriate range. The acid dissociation constant of the organic acid used in the invention is preferably from 0 to 10, and more preferably from 2 to 4. For example, the use of strong acids such as sulfuric acid or hydrochloric acid which acid dissociation constant thereof sometimes takes a negative value less than 0, are not preferred, although it depends on the concentration thereof. Further, when the aromatic organic acid or the multivalent organic acid is used as the organic acid, the molded article having high heat resistance and strength. For example, orthophthalic acid, isophthalic acid, terephthalic acid and trimesic acid have appropriate acid dissociation constants and also are aromatic multivalent organic acids, so that the molding material particularly excellent in heat stability, strength and heat resistance can be obtained. The acid dissociation constant as referred to in the invention indicates the first-step acid dissociation constant (pKa1) in the case of the multivalent organic acid.

The salt of the diazabicyclo compound and the organic acid can be produced by methods which have hitherto been known. For example, the diazabicyclo compound and the organic acid are dissolved in a solvent and mixed, or stirred at a temperature equal to or higher than the melting point of the organic acid, thereby being able to produce the salt. However, the production method is not limited to this method. When the salt of the diazabicyclo compound and the organic acid is produced, stirring and mixing are preferably performed in an atmosphere of nitrogen so that the diazabicyclo compound and the organic acid are not deteriorated by oxidation.

As for the mixing ratio of the diazabicyclo compound and the organic acid, when the ratio of the organic acid is high, the resin composition is excellent in heat stability. However, activity as the curing accelerator decreases to take a long period of time for molding and to cause the necessity to perform molding at high temperatures. On the other hand, when the ratio of the organic acid is low, the resin composition is impaired in heat stability. In the invention, the amount of the organic acid is preferably from 10 to 2,000 parts by weight, more preferably from 50 to 500 parts by weight, and still more preferably from 80 to 120 parts by weight, based on 100 parts by weight of the diazabicyclo compound.

Further, it is also possible to use a commercially available salt of a diazabicyclo compound and an organic acid as the curing accelerator.

The amount of the salt of the diazabicyclo compound and the organic acid used as the curing accelerator is preferably from 0.1 to 20 parts by weight, more preferably from 1 to 15 parts by weight, and still more preferably from 5 to 10 parts by weight, based on 100 parts by weight of the curing agent. When the amount of the curing accelerator is too large, heat stability is impaired. On the other hand, when the amount of the curing accelerator is too small, it becomes necessary to take a long period of time, and the necessity to perform molding at high temperatures arises.

The carbon material contains expanded graphite as an indispensable component. Ordinary flake graphite is one in which lamellar crystals are laminated. In contrast, the expanded graphite is graphite obtained by treating flake graphite with concentrated sulfuric acid, nitric acid or a hydrogen peroxide solution, and intercalating such a chemical solution into spaces between the lamellar crystals, followed by further heating to expand the spaces between the lamellar crystals when the intercalated chemical solution is vaporized. The expanded graphite is low in bulk density and large in surface area, and particles thereof are of a thinner lamellar form, compared to flake graphite and spherical graphite. Accordingly, when mixed with the resin, it easily forms conductive paths to dramatically improve conductivity of the molded article. For this reason, the amount thereof used can be decreased, and the resin amount can be relatively increased, so that fluidity of the resin composition can be enhanced. Further, the expanded graphite is in a lamellar form, so that it is flexible compared to artificial graphite and natural graphite, and the molded article using the same also becomes flexible.

The carbon material may be entirely composed of the expanded graphite. Alternatively, the carbon material may partly comprise the expanded graphite, and of the rest thereof may comprise other carbon material(s). The "other" carbon materials include but are not limited to, for example, artificial flake graphite, artificial spherical graphite, natural flake graphite, carbon black, carbon fiber, carbon nanofiber, carbon nanotube, diamondlike carbon, fullerene and carbon nanohorn. The ratio of the expanded graphite in the carbon material is preferably from 5 to 100% by weight, more preferably from 20 to 80% by weight, still more preferably from 30 to 70% by weight, and particularly preferably from 40 to 60% by weight. When the ratio of the expanded graphite is low, contact resistance increases. Further, when the ratio of the expanded graphite is high, material handling properties at the time of kneading in the preparation of the compound are inferior, and there is a fear of contaminating the working environment, because the expanded graphite is low in bulk density.

Furthermore, the carbon material is preferably present in an amount of 35 to 85% by weight of the total amount of the resin composition. When the ratio of the carbon material is too low, conductivity decreases. On the other hand, when the ratio of the carbon material is too high, strength decreases, and fluidity of the compound decreases. Accordingly, the following problem arises. That is, when injected into a mold in heat compression molding or injection molding, the pressure distribution of the molding material in the mold becomes broad, and hence the dimensional accuracy of the fuel cell separator molded is deteriorated.

Various additives for resins can be incorporated into the conductive epoxy resin composition of the invention as needed. For example, the addition of a lubricant makes it possible to prevent sticking to the mold or a kneader at the time of molding processing. As the lubricant, there can be used carnauba wax, stearic or montanic wax, or a metal salt thereof. It is also possible to add an inorganic filler such as glass fiber, silica, talc, clay or calcium carbonate, an organic filler such as wood flour, or a plasticizer, to the extent that does not deteriorate the conductivity.

The conductive epoxy resin composition of the invention is obtained by melt mixing. The epoxy resin or the curing agent is softened at a temperature equal to or higher than a certain temperature. This temperature at which the composition is softened is called the softening point. In the invention, the composition can be mixed in an apparatus adjusted to a temperature equal to or higher than the softening temperature of.either the epoxy resin or the curing agent. When either the epoxy resin or the curing agent is liquid at ordinary temperature, the composition may be mixed at ordinary temperature. As the apparatus used for mixing, various conventional apparatus can be used. Examples thereof include but are not limited to a non-pressure kneader, a pressure kneader, a twinscrew extruder, a single-screw extruder, a Banbury mixer, a two-roll mill and a three-roll mill. Further, the melt mixing may be preceded by preliminary mixing carried out by means of dry mixing.

In order to prevent curing during kneading, there has hitherto been performed a multistage kneading process comprising a step of kneading raw materials containing an epoxy resin and a carbon material and then pulverizing the kneaded product to produce a preliminary compound, and a step of kneading the resulting preliminary compound, a curing agent and a curing accelerator, and a step of pulverizing the kneaded product to produce a final compound. However, the composition of the invention, in which the above-mentioned specific curing accelerator is used, has excellent temperature stability. It is therefore unnecessary to employ such a two-stage kneading process or a further multistage kneading process, and this is advantageous also in production cost.

As described above, an important point of the invention is that the expanded graphite and the salt of the diazabicyclo compound and the organic acid are used in combination, and melt kneaded. When the expanded graphite is not used even though the salt of the diazabicyclo compound and the organic acid is used, a resin composition excellent in heat stability which does not cure during melt kneading or in a cylinder can be obtained. However, in order to obtain the same conductivity as when the expanded graphite is used, it is necessary to add a large amount of conductive filler, resulting in a decrease in the amount of resin. That is, the amount of resin which improves the fluidity of the resin composition decreases, and the amount of carbon material which reduces the fluidity increases, resulting in a substantial decrease in moldability. Further, when the salt of the diazabicyclo compound and the organic acid is not used even though the expanded graphite is used, the curing reaction proceeds during melt kneading a resin composition or in the cylinder for injection molding to cause a rapid increase in viscosity, resulting in crushing of the expanded graphite during melt kneading or in the cylinder for injection molding. As a result, strength of a molded article decreases, and conductivity also dramatically decreases. Furthermore, when the resin composition is allowed to cure at low temperatures, the curing accelerator is required to be added in a large amount. However, when the curing accelerator is added in a large amount, the strength and conductivity are more deteriorated by crushing of the expanded graphite as described above. Further, the moldability is also deteriorated due to a decrease in fluidity. When the azabicyclo compound is singly used, i.e., not as the salt of the organic acid, its activity as the curing accelerator is too strong, so that the curing reaction rapidly proceeds during kneading. Therefore, the above-mentioned problems become further marked. When a urea-based curing agent is used, there is the advantage that a viscosity increase does not occur during the production of the molding material, because of its excellent heat stability. However, the urea-based curing agent decomposes at the time of cure-molding to generate a gas, and the generated gas may causes voids in the molded article. In particular, when the expanded graphite is used, it is orientated along the plane direction in the molded article, so that the gas in the vertical direction to the plane becomes hard to penetrate and diffuse. Accordingly, the generated gas is enclosed in the molded article, resulting in easy occurrence of voids. Further, when the urea compound is used and the curing is performed within a short period time, voids become liable to occur because of insufficient curing. The composition can cure within a short period of time by adding the urea compound in a large amount. However, the decomposed gas is generated in a large amount, which may causes greater voids. In the fuel cell separator, the occurrence of voids deteriorates sealing properties of a reactive gas to reduce power generation performance of a fuel cell stack. Further, in the case of dry blending, the expanded graphite particles are not crushed in the production of the molding material, so that one excellent in conductivity is obtained. However, it cannot be molded by a high efficient method such as injection molding or transfer molding because of its low fluidity. In contrast, when the expanded graphite and the salt of the diazabicyclo compound and the organic acid are used in combination, these problems are dissolved. The mechanism of that is presumed as follows.

When the salt of the diazabicyclo compound and the organic acid is used, the curing reaction is hard to proceed at a low temperature of 100°C or lower which is assumed during melt kneading the resin composition or in the cylinder for injection molding. It becomes therefore possible to suppress shearing force loaded on the resin composition, and the crushing of the expanded graphite is suppressed to the minimum. The expanded graphite, which is lower in bulk density and larger in surface area, than flake graphite and spherical graphite and whose particles are of a lamellar form, easily forms conductive paths and comes into a pulverized state suitable for current flowing, when mixed with the resin. That is, when the other curing accelerators are used, the expanded graphite is crushed, and the conductive paths are hard to be formed. However, when the salt of the diazabicyclo compound and the organic acid is used, the expanded graphite is not crushed, and the conductive paths are easily formed. Further, the effect of suppressing crushing of the expanded graphite by using the expanded graphite and the salt of the diazabicyclo compound and the organic acid in combination also makes it possible to increase the resin amount which decrease conductivity in the resin composition. An increase in the resin amount increases fluidity of the resin composition, and dramatically improves dimensional accuracy of the molded article. The salt of the diazabicyclo compound and the organic acid decomposes, by heating, into the diazabicyclo compound serving as the curing accelerator and the organic acid. At this time, the decomposition temperature depends on the acidity of the organic acid. When the acid dissociation constant is high, the salt decomposes at low temperatures, and when the acid dissociation constant is low, the salt decomposes at high temperatures. The salt of the diazabicyclo compound and the organic acid is hard to decompose during the kneading step. However, when heated to a mold temperature at the time of cure molding, it rapidly decomposes into the diazabicyclo compound and the organic acid to exhibit activity of the diazabicyclo compound as the curing accelerator. The curing reaction starts after decomposition of the salt into the diazabicyclo compound and the organic acid, so that the curing reaction starts after an elapse of a certain induction period from the start of feeding the material into a mold. Further, when the curing reaction proceeds, the viscosity increases. Accordingly, fluidity and mold transfer properties are deteriorated to cause a problem in dimensional accuracy. However, there is the induction period from the start of feeding the material into the mold to the start of cure molding, so that the composition can be filled into the mold in a high-fluidity state. This makes it possible to set the molding pressure lower. Thus, the mold hardly deforms by the resin pressure, and a molded article having high dimensional accuracy can be obtained.

As described above, the conductive epoxy resin composition of the invention is excellent particularly in conductivity and fluidity. Accordingly, a molded article such as a fuel cell separator which is excellent in mechanical strength and has high conductivity can be obtained by using this conductive epoxy resin composition as the molding raw material. Further, transfer molding and injection molding are applicable in molding because of its high fluidity, so that it is also excellent in productivity.

### EXAMPLES

The present invention will be illustrated in greater detail with reference to the following examples and comparative examples, but the invention should not be construed as being limited thereto.

### Preparation of Salt of Diazabicyclo Compound and Organic Acid

Ten grams of DBU or DBN was dissolved in 20 ml of dichloromethane to prepare a diazabicyclo compound solution. Separately, 10 g of orthophthalic acid or phenol novolak (softening point: about 90°C) was dissolved in 20 ml of dichloromethane to prepare an organic acid solution. The diazabicyclo compound solution and the organic acid solution were mixed at a predetermined ratio, and stirred for 5 minutes. Precipitated crystals were separated by filtration and washed with hexane, followed by drying to obtain a salt of a diazabicyclo compound and an organic acid. The DBU/orthophthalic acid ratio was adjusted to 152/166 (weight ratio) for the salt of DBU and orthophthalic acid, the DBU/phenol novolak ratio was adjusted to 30/70 (weight ratio) for the salt of DBU and phenol novolak (containing 30% DBU), and the DBU/phenol novolak ratio was adjusted to 10/90 (weight ratio) for the salt of DBU and phenol novolak (containing 10% DBU).

### Preparation of Molding Material

According to the formulations shown in Table 1, 500 g of the total of materials were preliminarily mixed in a 10-liter Henschel mixer, and then, kneaded in a 1-liter pressure kneader at a chamber temperature of 100°C for 5 minutes. The resulting product was pulverized with a pulverizer to particles having a size of about 2 mm to obtain a molding material. Units in the formulations in Table 1 are expressed in percentages by weight. In comparative Example 6, a product obtained by preliminary mixing in the Henschel mixer, that is, a dry-mixed product, was directly used as the molding material. The evaluation of fluidity and the measurement of cuing reaction progress shown below were made.

### Preparation of Molded Article

Using the molding material, a molded article was prepared by injection molding. As an injection molding machine, there was used a molding machine for thermosetting resins (manufactured by Hishiya Seiko Co., Ltd.) having a mold clamping force of 80 t. The cylinder temperature was 50°C under a hopper, the nozzle temperature was 90°C, the mold temperature was 170°C, the injection rate was 20 mm/sec, and the curing time was from 60 to 180 sec. The molding pressure was appropriately set within the range of 30 to 70 MPa. The molding material was injection molded into a square thin plate 100 mm on one side and 2 mm in thickness, and the resulting molded article was subjected to cutting processing to obtain test pieces. When voids occurred in the molded article, portions other than the voids were sampled to prepare the test pieces. Then, the following evaluations were made for each test piece.

### Evaluation of Conductivity

The resistance in a penetrating direction (i.e., the vertical direction in Fig. 1) was measured by the method shown in Fig. 2 to make the evaluation of conductivity. A sample 21 cut out of the test piece was set between electrodes 23 with the interposition of carbon papers 22. The electric resistance was calculated from the current allowed to flow between the electrodes (measured with an ammeter 24) and the voltage between the carbon papers (measured with a voltmeter 25), and multiplied by the area of the sample to obtain the resistivity in the penetrating direction. The results thereof are shown in Table 1.

### Measurement of Flexural Strength at High Temperature

The flexural strength at a high temperature was determined based on JIS K7171, Plastics-Test Methods of Flexural Characteristics. The test was performed using an Instron type universal tester equipped with a thermostat in a test atmosphere of 100°C. The results thereof are shown in Table 1.

### Confirmation of Occurrence of Voids

Of the test pieces, the number of molded articles in which voids occurred after molding was counted. "The number of molded articles in which voids occurred/the number of total molded articles" was indicated in Table 1.

### Evaluation of Fluidity (Viscosity Property)

The fluidity of the molding material was measured in accordance with JIS K6911, Thermosetting Plastics, General Test Methods, "Extrusion Type Flow, Phenol Resin Having Good Flow". The outflow amount was taken as an index of fluidity. The results thereof are shown in Table 1.

### Measurement of Curing Reaction Progress

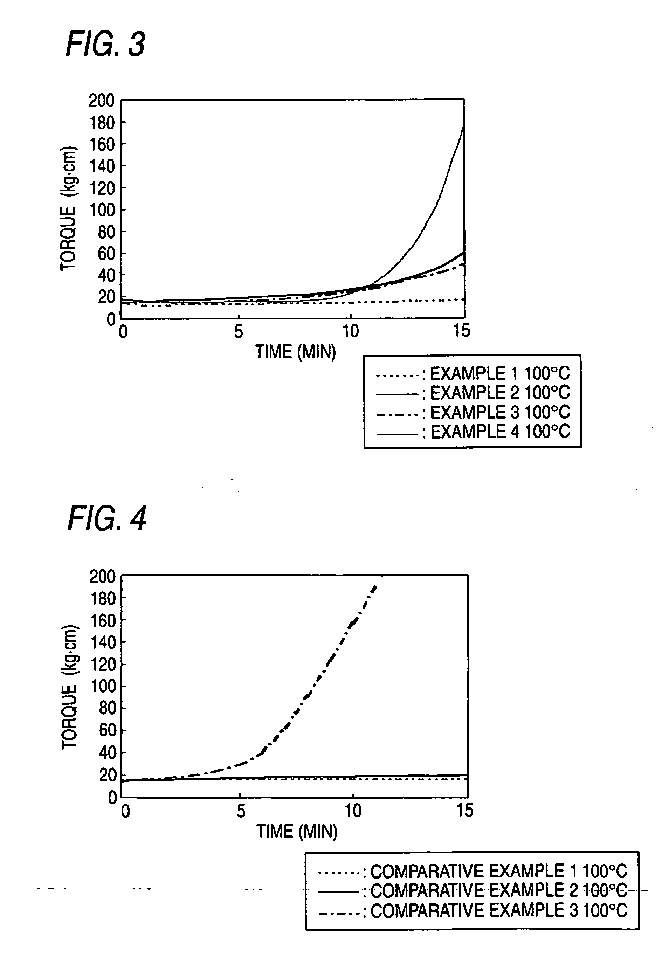

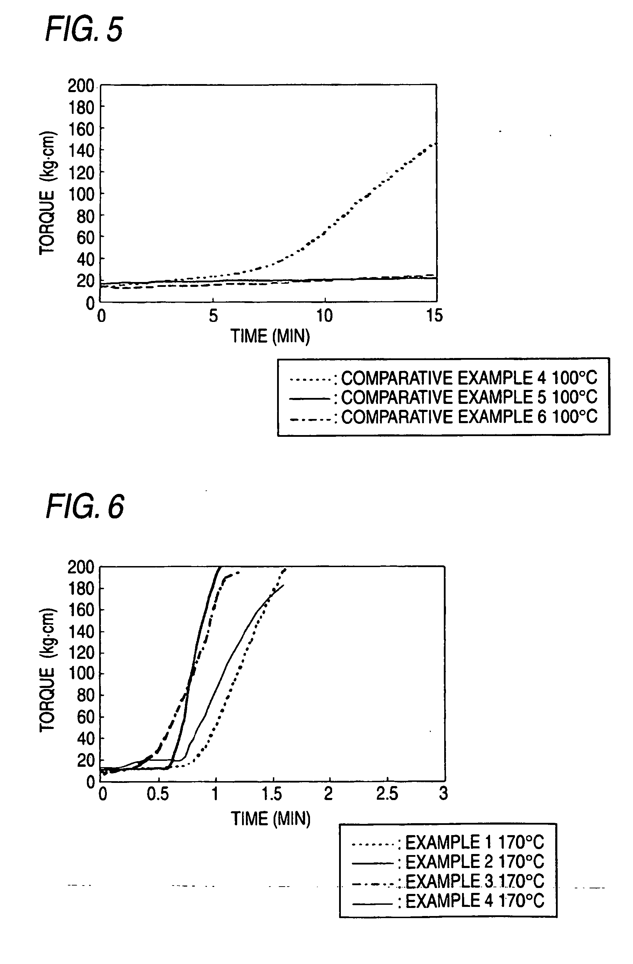

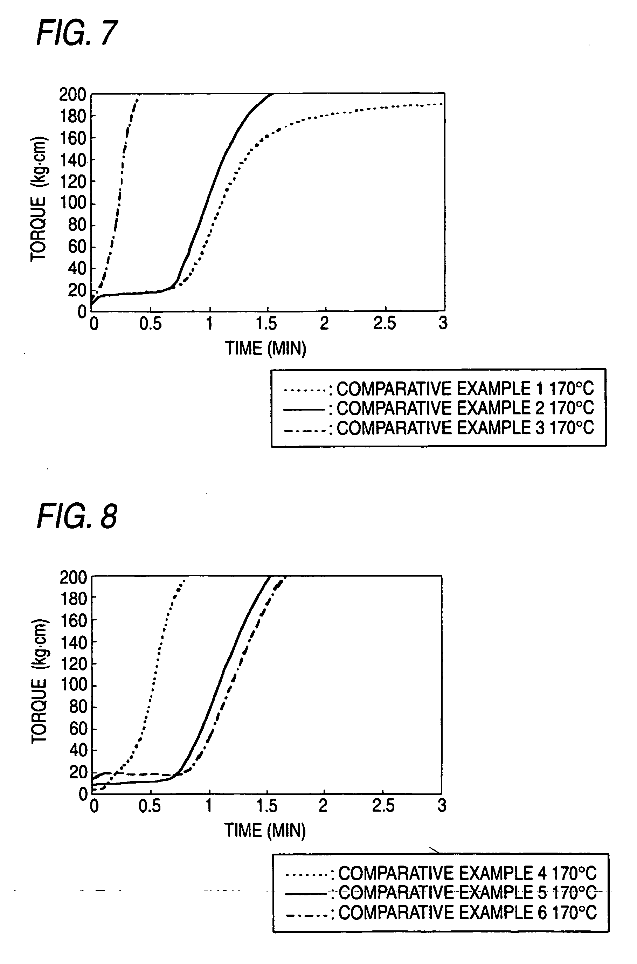

Changes in torque associated with the progress of the curing reaction of the molding material at 100°C or 170°C were measured using a moving die rheometer. The measuring time was 15 minutes. An increase in torque indicates the progress of curing. The results thereof are shown by graphs in Figs. 3 to 8.

**Table 1**

| | | Ex.1 | Ex.2 | Ex.3 | Ex. 4 | Com. Ex.1 | Com. Ex.2 | Com. Ex.3 | Com. Ex. 4 | Com. Ex. 5 | Com. Ex.6 |
|---|---|---|---|---|---|---|---|---|---|---|---|
| Formulation | Bisphenol A Novolak Type Epoxy Resin | 24 | 23 | 24 | 24 | 24 | 23 | 24 | 24 | 24 | 24 |
| | Phenol Novolak | 12 | 11 | 12 | 12 | 12 | 11 | 12 | 12 | 12 | 12 |
| | Orthophthalate of DBU | 2 | 4 | | | | | | | 2 | 2 |
| | Phenol Novolak Salt of DBU (DBU:30%) | | | 2 | | | | | | | |
| | Phenol Novolak Salt of DBU (DBU:10%) | | | | 2 | | | | | | |
| | 3-(3,4-Dichlorophenyl)-1,1-dimethylurea | | | | | 2 | 4 | | | | |
| | Triphenylphosphine | | | | | | | 2 | | | |
| | 2-Methylimidazole | | | | | | | | 2 | | |
| | Expanded Graphite | 30 | 30 | 30 | 30 | 30 | 30 | 30 | 30 | | 30 |
| | Artificial Graphite | 29 | 29 | 29 | 29 | 29 | 29 | 29 | 29 | 59 | 29 |
| | Lubricant | 3 | 3 | 3 | 3 | 3 | 3 | 3 | 3 | 3 | 3 |
| Test Results | Flexural Strength (Mpa) | 49 | 46 | 42 | 42 | 45 | 43 | 35 | 38 | 48 | Unmoldable |
| | Resistance in Penetrating Direction (mΩ·cm²) | 13 | 17 | 13 | 17 | 13 | 15 | 33 | 40 | 336 | Unmoldable |
| | Number of Void Occurrences | 0/10 | 0/10 | 0/10 | 0/10 | 2/10 | 7/10 | 0/10 | 0/10 | 0/10 | Unmoldable |
| | Fluidity (g) | 31 | 31 | 28 | 29 | 32 | 32 | 10 | 15 | 29 | 1 or less |

| | | | | | | | | | | | |
|---|---|---|---|---|---|---|---|---|---|---|---|
| Ex: Invention Example Com. Ex.: Comparative Example | | | | | | | | | | | |

As shown in Table 1, all the invention Examples and the comparative Examples used the bisphenol A novolak type epoxy resin and phenol novolak as the curing agent. Further, in each of the invention Examples, the salt of the diazabicyclo compound and the organic acid was added as the curing accelerator, and the expanded graphite and the artificial graphite were used as the carbon material. In contrast, comparative Examples 1 and 2 used 3-(3,4-dichlorophenyl)-1,1-dimethylurea as the curing accelerator, comparative Example 3 used triphenylphosphine, and comparative Example 4 used 2-methylimidazole which is an imidazole compound. Further, comparative Example 5 used the salt of the diazabicyclo compound and the organic acid as the curing accelerator, but used only the artificial graphite as the carbon material without using the expanded graphite. In comparative Example 6, the same formulation as in Example 1 was used, but the molding material was obtained by dry mixing.

As apparent from the test results, the molded articles of respective invention Examples had high strength and low electric resistance, and no void was confirmed to cause no appearance problem. Further, the molding materials of respective invention Examples also have good fluidity to be easily injection moldable materials. Torque increases after an elapse of a certain induction period at 170°C, which is the molding temperature, so that the molding material can be filled into the mold in a high-fluidity state within a period until the start of the curing reaction. Further, from the fact that changes in torque at 100°C scarcely occurred at least within 5 minutes, the progress of the curing reaction was very slow at 100°C. Accordingly, the molding material was excellent in heat stability. In particular, in Examples 1 and 2 using the salt of 1,8-diazabicyclo(5,4,0)undecene-7 and orthophthalic acid, torque rapidly increased after an elapse of an induction period, so that short time curing was possible. In these Examples, the molded articles having higher strength were obtained among the invention Examples.

In contrast, in comparative Examples 1 and 2 using the dimethylurea compound as the curing accelerator, the molded articles having very excellent heat stability, high strength and low electric resistance were obtained, but voids were sometimes observed in the molded articles. Both comparative Examples 3 and 4 had a problem for heat stability, and were inferior in both strength and electric resistance to Examples. Further, since the induction period in comparative Examples 3 and 4 is short, there is a fear that the material cures in the course of filling into the mold to cause a short shot or a mold breakage or a decrease in dimensional accuracy due to an increase in molding pressure. Comparative Example 5 had a problem of having very high electric resistance. In comparative Example 6, the fluidity was low, so that it was impossible to discharge the molding material from a cylinder, resulting in failure to obtain a molded article.

From the above, it is apparent that the molded articles having no occurrence of void and excellent in conductivity and dimensional accuracy are obtained according to the invention.

## Claims

1. A conductive epoxy resin composition comprising an epoxy resin, a curing agent, a curing accelerator comprising a salt of a diazabicyclo compound and an organic acid, and a carbon material containing expanded graphite.

2. The conductive epoxy resin composition according to claim 1, wherein the organic acid has an acid dissociation constant of 0 to 10.

3. The conductive epoxy resin composition according to claim 1 or 2, wherein the organic acid is an aromatic organic acid.

4. The conductive epoxy resin composition according to any one of claims 1 to 3, wherein the organic acid is a multivalent organic acid.

5. The conductive epoxy resin composition according to claim 1, wherein the organic acid is orthophthalic acid, isophthalic acid, terephthalic acid or trimesic acid.

6. The conductive epoxy resin composition according to any one of claims 1 to 5, wherein the diazabicyclo compound is 1,8-diazabicyclo(5,4,0)undecene-7 or 1,5-diazabicyclo(4,3,0)nonene-5.

7. The conductive epoxy resin composition according to any one of claims 1 to 6, wherein the curing agent has two or more phenolic hydroxyl groups in its molecule.

8. The conductive epoxy resin composition according to any one of claims 1 to 7, wherein the epoxy resin is a multifunctional epoxy resin.

9. The conductive epoxy resin composition according to any one of claims 1 to 8, wherein 5 to 100% by weight of the carbon material is expanded graphite and the balance is at least one of artificial graphite, natural flake graphite, soil graphite, carbon black and carbon fiber.

10. The conductive epoxy resin composition according to any one of claims 1 to 9, wherein the carbon material accounts for 35 to 85% by weight of the total amount.

11. The conductive epoxy resin composition according to any one of claims 1 to 10, wherein the curing accelerator is blended in an amount of 0.1 to 20 parts by weight based on 100 parts by weight of the curing agent.

12. A method for producing a conductive epoxy resin composition comprising blending, at a predetermined ratio, an epoxy resin, a curing agent, a curing accelerator comprising a salt of a diazabicyclo compound and an organic acid, and a carbon material containing expanded graphite, followed by melt-kneading.

13. The method according to claim 12, wherein the melt kneading is carried out at a temperature equal to or higher than a softening temperature of the epoxy resin or the curing agent.

14. An epoxy resin molded article produced by transfer molding or injection molding the conductive epoxy resin composition according to any one of claims 1 to 11.

15. A fuel cell separator comprising the conductive epoxy resin composition according to any one of claims 1 to 11.

## Patentansprüche

1. Leitfähige Epoxyharzzusammensetzung, umfassend ein Epoxyharz, ein Härtungsmittel, einen Härtungsbeschleuniger, der ein Salz einer Diazobicycloverbindung und einer organischen Säure umfasst, und ein Kohlenstoffmaterial, das expandierten Grafit enthält.

2. Leitfähige Epoxyharzzusammensetzung gemäß Anspruch 1, worin die organische Säure eine Säuredissoziationskonstante von 0 bis 10 hat.

3. Leitfähige Epoxyharzzusammensetzung gemäß Anspruch 1 oder 2, worin die organische Säure eine aromatische organische Säure ist.

4. Leitfähige Epoxyharzzusammensetzung gemäß einem der Ansprüche 1 bis 3, worin die organische Säure eine mehrwertige organische Säure ist.

5. Leitfähige Epoxyharzzusammensetzung gemäß Anspruch 1, worin die organische Säure Orthophthalsäure, Isophthalsäure, Terephthalsäure oder Trimesinsäure ist.

6. Leitfähige Epoxyharzzusammensetzung gemäß einem der Ansprüche 1 bis 5, worin die Diazabicycloverbindung 1,8-Diazabicyclo(5,4,0)undecen-7 oder 1,5-Diazabicyclo-(4,3,0)nonen-5 ist.

7. Leitfähige Epoxyharzzusammensetzung gemäß einem der Ansprüche 1 bis 6, worin das Härtungsmittel zwei oder mehr phenolische Hydroxylgruppen in seinem Molekül hat.

8. Leitfähige Epoxyharzzusammensetzung gemäß einem der Ansprüche 1 bis 7, worin das Epoxyharz ein multifunktionelles Epoxyharz ist.

9. Leitfähige Epoxyharzzusammensetzung gemäß einem der Ansprüche 1 bis 8, worin 5 bis 100 Gew.-% des Kohlenstoffmaterials expandierter Grafit ist und der Rest wenigstens ein Glied aus der Gruppe von künstlichem Grafit, natürlichem Flockengrafit, Abfallgrafit, Ruß und Kohlenfaser ist.

10. Leitfähige Epoxyharzzusammensetzung gemäß einem der Ansprüche 1 bis 9, worin das Kohlenstoffmaterial 35 bis 85 Gew.-% der Gesamtmenge ausmacht.

11. Leitfähige Epoxyharzzusammensetzung gemäß einem der Ansprüche 1 bis 10, worin der Härtungsbeschleuniger in einer Menge von 0,1 bis 20 Gewichtsteilen, bezogen auf 100 Gewichtsteile des Härtungsmittels, eingemischt ist.

12. Verfahren zum Herstellen einer leitfähigen Epoxyharzzusammensetzung, umfassend das Vermischen in einem vorbestimmten Verhältnis eines Epoxyharzes, eines Härtungsmittels, eines Härtungsbeschleunigers, der ein Salz einer Diazabicycloverbindung und einer organischen Säure umfasst, und eines Kohlenstoffmaterials, das expandierten Grafit enthält, gefolgt von Schmelzkneten.

13. Verfahren gemäß Anspruch 12, worin das Schmelzkneten bei einer Temperatur gleich oder höher als eine Erweichungstemperatur des Epoxyharzes oder des Härtungsmittels durchgeführt wird.

14. Epoxyharz-Formkörper, hergestellt durch Transferpressen oder Spritzgießen der leitfähigen Epoxyharzzusammensetzung gemäß einem der Ansprüche 1 bis 11.

15. Brennstoffzellenseparator, umfassend die leitfähige Epoxyharzzusammensetzung gemäß einem der Ansprüche 1 bis 11.

## Revendications

1. Composition conductrice de résine époxy comprenant une résine époxy, un durcisseur, un accélérateur de durcissement comprenant un sel d'un composé diazabicyclo et d'un acide organique, et un matériau carbone contenant du graphite expansé.

2. Composition conductrice de résine époxy selon la revendication 1, dans laquelle l'acide organique a une constante de dissociation acide de 0 à 10.

3. Composition conductrice de résine époxy selon la revendication 1 ou 2, dans laquelle l'acide organique est un acide organique aromatique.

4. Composition conductrice de résine époxy selon l'une quelconque des revendications 1 à 3, dans laquelle l'acide organique est un acide organique multivalent.

5. Composition conductrice de résine époxy selon la revendication 1, dans laquelle l'acide organique est l'acide orthophtalique, l'acide isophtalique, l'acide téréphtalique ou l'acide trimésique.

6. Composition conductrice de résine époxy selon l'une quelconque des revendications 1 à 5, dans laquelle le composé diazabicyclo est le 1,8-diazabicyclo(5,4,0)undécène-7 ou le 1,5-diazabicyclo(4,3,0)nonène-5.

7. Composition conductrice de résine époxy selon l'une quelconque des revendications 1 à 6, dans laquelle le durcisseur comporte deux groupes hydroxyle phénoliques ou plus dans sa molécule.

8. Composition conductrice de résine époxy selon l'une quelconque des revendications 1 à 7, dans laquelle la résine époxy est une résine époxy multifonctionnelle.

9. Composition conductrice de résine époxy selon l'une quelconque des revendications 1 à 8, dans laquelle 5 à 100 % en poids du matériau carbone est du graphite expansé et le reste est au moins l'un du graphite artificiel, du graphite lamellaire naturel, du graphite tellurique, du noir de carbone et d'une fibre de carbone.

10. Composition conductrice de résine époxy selon l'une quelconque des revendications 1 à 9, dans laquelle le matériau carbone représente 35 à 85 % en poids de la quantité totale.

11. Composition conductrice de résine époxy selon l'une quelconque des revendications 1 à 10, dans laquelle l'accélérateur de durcissement est mélangé en une quantité de 0,1 à 20 parties en poids sur la base de 100 parties en poids du durcisseur.

12. Procédé de production d'une composition conductrice de résine époxy comprenant le mélange, à un rapport prédéterminé, d'une résine époxy, d'un durcisseur, d'un accélérateur de durcissement comprenant un sel d'un composé diazabicyclo et d'un acide organique, et d'un matériau carbone contenant du graphite expansé, suivi par un malaxage en fusion.

13. Procédé selon la revendication 12, dans lequel le malaxage en fusion est réalisé à une température égale ou supérieure à une température de ramollissement de la résine époxy ou du durcisseur.

14. Article moulé en résine époxy produit par moulage par transfert ou moulage par injection de la composition conductrice de résine époxy selon l'une quelconque des revendications 1 à 11.

15. Séparateur de pile à combustible comprenant la composition conductrice de résine époxy selon l'une quelconque des revendications 1 à 11.
